Europäisches Patentamt

European Patent Office

Office européen des brevets

(19)

(11) Publication number: **0 074 938**
**B1**

(12) EUROPEAN PATENT SPECIFICATION

(45) Date of publication of patent specification: **04.05.88**

(21) Application number: **82850180.9**

(22) Date of filing: **10.09.82**

(51) Int. Cl.⁴: **F 03 D 9/00,** F 03 D 11/04,
B 63 H 13/00, B 63 B 1/04

(54) **Freely floating wind power plant.**

(30) Priority: **14.09.81 FI 812844**

(43) Date of publication of application:
**23.03.83 Bulletin 83/12**

(45) Publication of the grant of the patent:
**04.05.88 Bulletin 88/18**

(84) Designated Contracting States:
**AT BE CH DE FR GB IT LI NL SE**

(56) References cited:
**EP-A-0 024 998
DE-C- 390 908
FR-A- 542 172
GB-A- 674 651
GB-A- 993 117
GB-A-1 481 699
US-A-3 212 470**

(73) Proprietor: **Sundman, Stig
Dragonvägen 12A5
SF-00330 Helsingfors 33 (FI)**

(72) Inventor: **Sundman, Stig
Dragonvägen 12A5
SF-00330 Helsingfors 33 (FI)**

(74) Representative: **Mrazek, Werner et al
Dr. Ludwig Brann Patentbyra AB Drottninggatan
7 Box 1344
S-751 43 Uppsala (SE)**

Courier Press, Leamington Spa, England.

## Description

The present invention concerns a freely floating wind power plant consisting of a frame floating on a water surface, upon which has been attached a tower with a wind-driven generator.

A stationary wind-driven generator usually consists of a wind turbine rotor mounted to a generator on top of a tower. In order to be able to utilize the energy of the wind independent of its direction, the turbine/generator combination can turn about a vertical axis. This implies two drawbacks, compared with a structure where the turbine rotor points in one given direction all the time. One drawback is that a strongly dimensioned bearing is required; the other is that the tower must be slender enough all around for the rotor to clear the sides, legs or stays of the tower.

Furthermore, from GB—A—1 481 699 and EP—A—24998 boats of a similar design are previously known. As with the present invention these boats receive their driving power from a wind-driven generator. However, since the generator, tower and hull do not form a rigid structure, these boats suffer from the same drawback as the previously mentioned stationary design.

From GB—A—674 651 a stationary wind-driven generator in which the tower, generator and hull form a rigid structure is previously known. This structure does, however, not contain any driving mechanism and has to be anchored to the bottom of the sea.

The assembly of the present invention is freely floating, does not suffer from the previously mentioned drawbacks and can use a fraction of the produced energy to hold itself stationary and/or travel in any desired direction and still hold its wind-driven generator against the wind at all times.

The wind-driven generator assembly of the present invention is characterized in the claim.

This design implies a simplified construction since no vertical shaft with associated bearing is required high up in the tower. A lighter and stronger tower structure is obtained since the legs and stays on the sides and behind the turbine rotor may be carried far enough out without impeding its rotation. A lighter tower structure for that reason as well that violent gusts of wind impose no similar load on the tower's legs as if the legs were dumbly affixed to the rock base. A gust of wind means, mostly, that the tower makes a "curtsey" in the water.

The invention is described in detail with reference to the attached drawing, wherein

Fig. 1 presents a wind driven generator assembly according to the claim.

Fig. 2 presents the craft depicted in Fig. 1, from below.

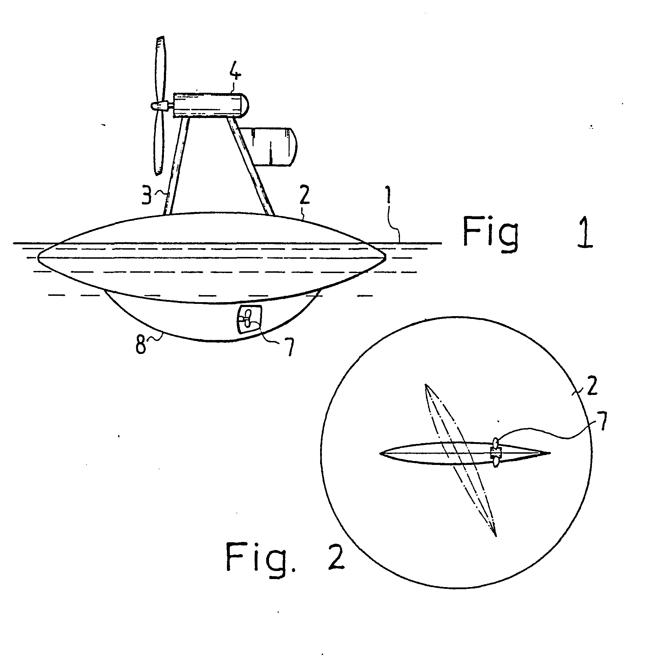

The wind driven generator assembly consists of a frame 2 floating on a water surface 1 and upon which has been affixed a tower 3 with a wind-driven generator 4. The frame 2 consists of a body which is round in the horizontal plane and stable on the water surface 1. The frame in Fig. 1 is disk-shaped and the plant or craft has a drive mechanism such as a propeller 7 under the water surface and obtains its energy from the wind generator 4 located above the water surface. The propeller 7, together with the craft's keel 8, is turnable about the vertical axis of said body.

One or several propellers are employed to keep the structure stationary.

With the aid of the propeller, or propellers, just mentioned, or with the aid of a portable electric motor (outboard motor) obtaining its power from the generator, it is possible to navigate the apparatus under its own power from the factory (shipyard) to a customer at any point whatsoever on the coasts of Earth or out on the open sea.

As a craft, the apparatus has the advantage, compared with sailships, that it is able to travel straight against the wind without having to tack. It is moreover particularly easy to manoeuvre compared with a sailing craft.

The craft may be constructed to be a disk-shaped tank boat, travelling partly or totally under water, for transporting oil, fresh water, etc. A turnable keel with propeller under the disk-shaped hull enables the craft to travel in any desired direction with reference to the wind.

## Claim

A wind-driven generator assembly, comprising a frame (2) floating on a water surface (1), upon which frame (2) has been rigidly mounted a tower (3) and including a wind-driven generator (4) rigidly fixed on top of said tower (3), the assembly consisting of frame, tower and generator turning into the wind by the wind pressure acting on it, characterized in said frame (2) consisting of a freely floating round body and in a drive mechanism such as a propeller (7) being provided under the body and obtaining its energy from the wind generator (4), said drive mechanism being turnable relative to said freely floating round body about the vertical axis of said body.

## Patentanspruch

Windangetriebener Generatoraufbau umfassend einen Rahmen (2), der auf einer Wasseroberfläche (1) schwimmt und auf welchem Rahmen (2) ein Turm (3) starr befestigt worden ist und der einen windangetriebenen Generator (4) enthält, der starr auf der Spitze dieses Turms (3) befestigt ist, wobei der Aufbau, der aus Rahmen, Turm und Generator besteht, in den Wind durch den auf ihn wirkenden Winddruck dreht, dadurch gekennzeichnet ist, daß dieser Rahmen (2) aus einem frei schwinmmenden runden Körper besteht und dadurch, daß ein Antriebsmechanismus wie ein Propeller (7) unter dem Körper vorgesehen ist und seine Energie von dem Windgenerator (4) erhält, wobei dieser Antriebsmechanismus relativ zu diesem frei schwimmenden runden Körper um eine vertikale Achse dieses Körpers drehbar ist.

## Revendication

Ensemble de générateur à énergie éolienne, comprenant un châssis (2) flottant sur un plan d'eau (1), châssis (2) sur lequel a été montée de façon rigide une tour (3) et incorporant un générateur (4) à énergie éolienne fixé de façon rigide sur le dessus de la tour (3), ensemble constitué par le châssis, la tour et le générateur tournant dans le vent sous l'action de la pression du vent sur celui-ci, caractérisé en ce que le châssis (2) consiste en un corps rond flottant librement et en ce qu'un mécanisme d'entraînement tel qu'une hélice (7) est prévue sous le corps et dérivant son énergie du générateur (4) éolien, le mécanisme d'entraînement pouvant tourner par rapport au corps rond flottant librement sur l'axe vertical du corps.

Fig 1

Fig. 2